# EUROPEAN PATENT APPLICATION

(11) **EP 4 656 580 A1**
(43) Date of publication of application: **03.12.2025**
(21) Application number: 24762986.8
(22) Date of filing: 18.02.2024
(51) Int. Cl.: B66C 23/78

(54) **FAULT DETECTION METHOD AND APPARATUS, SYSTEM, AND VEHICLE**

(30) Priority: 28.02.2023 CN 202310178114
(71) Applicant: Sany Automobile Manufacturing Co., Ltd., Changsha, Hunan 410100 (CN)
(72) Inventor: LIU, Wei, Changsha, Hunan 410100 (CN); FENG, Xiaozheng, Changsha, Hunan 410100 (CN); WANG, Ziming, Changsha, Hunan 410100 (CN)
(74) Representative: Elzaburu S.L.P.
(86) International application number: PCT/CN2024/077341
(87) International publication number: WO 2024/179303

(57) **Abstract**

The present application provides a fault detection method, apparatus, and system, and a vehicle, which relates to the field of vehicle control technology. The method includes: acquiring a first signal output by the valve core detection sensor and a second signal output by the draw-wire encoder on each of the plurality of support legs; and determining whether the draw-wire encoder provided on each support leg has a fault according to the first signal, and the second signal output by the draw-wire encoder of each support leg. For the fault detection method, apparatus and system, and the vehicle, it can be used for the technical solution of detecting whether the draw-wire encoder on the work machine is damaged in real-time, so as to improve the reliability and security of the device.

## Description

This application claims priority to Chinese Patent Application No. 202310178114.4, filed with the China National Intellectual Property Administration on February 28, 2023 and entitled "FAULT DETECTION METHOD, APPARATUS AND SYSTEM, AND VEHICLE". The disclosures of the aforementioned applications are hereby incorporated by reference in its entirety.

### TECHNICAL FIELD

The present application relates to the field of vehicle control technology, and in particular, to a fault detection method, apparatus, and system, and a vehicle.

### BACKGROUND

A work machine (e.g., a crane, a pile machine, a blender, an excavator, etc.) usually undergoes a shift in a center of gravity during construction operations. Therefore, support legs are adopted to ensure a stable and sufficient supporting span, so as to avoid risks such as device overturning, thereby ensuring safety during the construction process.

In the related art, an extended position or a rising height of the support legs of the work machine can be detected by mounting a draw-wire sensor. However, since the draw-wire encoder is a vulnerable member, and the working environment of the work machine is generally relatively harsh, so that the service life of the draw-wire encoder is further shortened.

Based on this, there is an urgent need for a technical solution that can detect whether the draw-wire encoder on the work machine is damaged in real time, so as to improve the reliability and security of the device.

### SUMMARY

The object of the present application is to provide a fault detection method, apparatus and system, and a vehicle, which are used for the technical solution of detecting whether the draw-wire encoder on the work machine is damaged in real-time, so as to improve the reliability and security of the device.

The present application provides a fault detection method, which is applied to a position detection system of a work machine support leg, and the system includes: a support leg multi-way valve, and a plurality of support legs controlled by the support leg multi-way valve; where the support leg multi-way valve is provided with a valve core detection sensor, and the valve core detection sensor is configured to detect working states of the plurality of support legs; each of the plurality of support legs is provided with a draw-wire encoder for detecting a displacement amount of the support leg, and the method includes:
acquiring a first signal output by the valve core detection sensor and a second signal output by the draw-wire encoder on each of the plurality of support legs; and determining whether the draw-wire encoder provided on each support leg has a fault according to the first signal, and the second signal output by the draw-wire encoder of each support leg.

Optionally, the determining whether the draw-wire encoder provided on each support leg has a fault according to the first signal, and the second signal output by the draw-wire encoder of each support leg, including: in a case where the first signal indicates that a working state of a target support leg in the plurality of support legs is an extending state, determining that a target draw-wire encoder has a fault if the second signal indicates that a speed of the target draw-wire encoder provided on the target support leg in the plurality of support legs is greater than a preset maximum value; or, in the case where the first signal indicates that the working state of the target support leg is the extending state, determining that the target draw-wire encoder has a fault if the second signal indicates that the speed of the target draw-wire encoder is less than a preset minimum value.

Optionally, the determining whether the draw-wire encoder provided on each support leg has a fault according to the first signal, and the second signal output by the draw-wire encoder of each support leg, including: in a case where the first signal indicates that a working state of a target support leg is a retracting state, determining that the target draw-wire encoder has a fault if the second signal indicates that a speed of the target draw-wire encoder provided on the target support leg is greater than a preset maximum value; or, in the case where the first signal indicates that the working state of the target support leg is the retracting state, determining that the target draw-wire encoder has a fault if the second signal indicates that the speed of the target draw-wire encoder is less than a preset minimum value.

Optionally, the determining whether the draw-wire encoder provided on each support leg has a fault according to the first signal, and the second signal output by the draw-wire encoder of each support leg, including: in a case where the first signal indicates that a working state of a target support leg is a non-operating state, determining that a target draw-wire encoder is abnormal if a speed of the target draw-wire encoder is greater than a preset minimum value.

Optionally, the determining that the target draw-wire encoder has a fault if the second signal indicates that the speed of the target draw-wire encoder is less than the preset minimum value, including: determining that the target draw-wire encoder has a fault if the second signal indicates that the speed of the target draw-wire encoder is less than the preset minimum value and a hydraulic system of the target support leg operates normally.

Optionally, before acquiring the first signal output by the valve core detection sensor and the second signal output by the draw-wire encoder on each of the plurality of support legs, the method further includes: acquiring a target pulse signal generated by the target draw-wire encoder provided on any target support leg in the plurality of support legs and a working state of the target support leg; and calculating a target number of revolutions of the target draw-wire encoder according to the target pulse signal, and calculating a current extended position of the target support leg according to the target number of revolutions, an adjustment coefficient corresponding to the target number of revolutions and the working state of the target support leg; where the working state of the target support leg includes an extending state and a retracting state, and the adjustment coefficient is configured to correct a displacement error generated by the target draw-wire encoder.

Optionally, the calculating the target number of revolutions of the target draw-wire encoder according to the target pulse signal, including: acquiring a target rotation angle corresponding to one pulse signal of the target draw-wire encoder, and calculating the target number of revolutions of the target draw-wire encoder based on the target rotation angle and the number of signals contained in the target pulse signal.

Optionally, before calculating the current extended position of the target support leg according to the target number of revolutions, the adjustment coefficient corresponding to the target number of revolutions and the working state of the target support leg, the method further includes: in the case where the working state of the target support leg is the extending state, adjusting a value of the adjustment coefficient in real time according to the size of the target number of revolutions; where the value of the adjustment coefficient is positively correlated with the target number of revolutions.

Optionally, before calculating the current extended position of the target support leg according to the target number of revolutions, the adjustment coefficient corresponding to the target number of revolutions and the working state of the target support leg, the method further includes: in the case where the working state of the target support leg is a retracting state, adjusting a value of the adjustment coefficient in real time according to the size of the target number of revolutions; where the value of the adjustment coefficient is negatively correlated with the target number of revolutions.

Optionally, the calculating the current extended position of the target support leg according to the target number of revolutions, the adjustment coefficient corresponding to the target number of revolutions and the working state of the target support leg, including: acquiring an average circumference of a draw wire per revolution in the target draw-wire encoder, and calculating a displacement amount of the target support leg according to the target number of revolutions, the adjustment coefficient and the average circumference; and calculating the current extended position of the target support leg according to the displacement amount of the target support leg.

The present application further provides a fault detection apparatus, which is applied to a position detection system of a work machine support leg, and the system includes: a support leg multi-way valve, and a plurality of support legs controlled by the support leg multi-way valve; where the support leg multi-way valve is provided with a valve core detection sensor, and the valve core detection sensor is configured to detect working states of the plurality of support legs; each of the plurality of support legs is provided with a draw-wire encoder for detecting a displacement amount of the support leg, and the apparatus includes:
an acquisition module is configured to acquire a first signal output by the valve core detection sensor and a second signal output by the draw-wire encoder on each of the plurality of support legs; and a detection module is configured to determine whether the draw-wire encoder provided on each support leg has a fault according to the first signal, and the second signal output by the draw-wire encoder of each support leg.

Optionally, the detection module is specifically configured to, in a case where the first signal indicates that a working state of the target support leg in the plurality of support legs is an extending state, determine that the target draw-wire encoder has a fault if the second signal indicates that a speed of the target draw-wire encoder provided on the target support leg in the plurality of support legs is greater than a preset maximum value; and the detection module is further specifically configured to, in a case where the first signal indicates that a working state of the target support leg is an extending state, determine that the target draw-wire encoder has a fault if the second signal indicates that a speed of the target draw-wire encoder is less than a preset minimum value.

Optionally, the detection module is specifically configured to, in a case where the first signal indicates that a working state of the target support leg is a retracting state, determine that the target draw-wire encoder has a fault if the second signal indicates that a speed of the target draw-wire encoder is greater than a preset maximum value; and the detection module is further specifically configured to, in the case where the first signal indicates that a working state of the target support leg is a retracting state, determine that the target draw-wire encoder has a fault if the second signal indicates that a speed of the target draw-wire encoder is less than a preset minimum value.

Optionally, the detection module is specifically configured to, in a case where the first signal indicates that a working state of the target support leg is a non-operating state, determine that the target draw-wire encoder is abnormal if a speed of the target draw-wire encoder is greater than a preset minimum value.

Optionally, the detection module is specifically configured to determine that the target draw-wire encoder has a fault if the second signal indicates that the speed of the target draw-wire encoder is less than the preset minimum value and a hydraulic system of the target support leg operates normally.

Optionally, the apparatus further includes: a calculation module; where the acquisition module is further configured to acquire a target pulse signal generated by the target draw-wire encoder provided on the target support leg and the working state of the target support leg; and the calculation module is configured to calculate a target number of revolutions of the target draw-wire encoder according to the target pulse signal, and calculate a current extended position of the target support leg according to the target number of revolutions, an adjustment coefficient corresponding to the target number of revolutions and the working state of the target support leg; where the working state of the target support leg includes an extending state and a retracting state, and the adjustment coefficient is configured to correct a displacement error generated by the target draw-wire encoder.

Optionally, the acquisition module is configured to acquire a target rotation angle corresponding to one pulse signal of the target draw-wire encoder; and the calculation module is specifically configured to calculate the target number of revolutions of the target draw-wire encoder based on the target rotation angle and the number of signals contained in the target pulse signal.

Optionally, the apparatus further includes: an adjustment module; and the adjustment module is configured to, in a case where the working state of the target support leg is the extending state, adjust a value of the adjustment coefficient in real time according to the size of the target number of revolutions; where the value of the adjustment coefficient is positively correlated with the target number of revolutions.

Optionally, the adjustment module is further configured to, in a case where the working state of the target support leg is a retracting state, adjust a value of the adjustment coefficient in real time according to the size of the target number of revolutions; where the value of the adjustment coefficient is negatively correlated with the target number of revolutions.

Optionally, the calculation module is specifically configured to acquire an average circumference of a draw wire per revolution in the target draw-wire encoder, and calculate a displacement amount of the target support leg according to the target number of revolutions, the adjustment coefficient and the average circumference; and the calculation module is further specifically configured to calculate the current extended position of the target support leg according to the displacement amount of the target support leg.

The present application further provides a computer program product, including a computer program/instruction which, when being executed by a processor, implements the steps of any one of the fault detection methods mentioned above.

The present application further provides an electronic device, including a memory, a processor and a computer program stored in the memory and is executable on the processor, where the processor executes the program to implement the steps of any one of the fault detection methods mentioned above.

The present application further provides a position detection system of a work machine support leg, including: a plurality of support legs and a controller; where any target support leg in the plurality of support legs is provided with a draw-wire encoder for detecting a displacement amount of the target support leg; and the controller is configured to implement the steps of any one of the fault detection methods mentioned above.

The present application further provides a vehicle with the position detection system of the work machine support leg as described above mounted thereon.

The present application further provides a computer-readable storage medium on which a computer program is stored, where the computer program, when being executed by a processor, implements the steps of any one of the fault detection methods mentioned above.

In the fault detection method, apparatus and system, and the vehicle provided in the present application, in order to monitor the state of the draw-wire sensor provided on each support leg in real time and determine whether there is a fault, firstly, it is necessary to acquire the first signal output by the valve core detection sensor and the second signal output by the draw-wire encoder on each of the plurality of support legs. And then, according to the first signal, and the second signal output by the draw-wire encoder of each support leg, it is determined whether the draw-wire encoder provided on each support leg has a fault. In this way, the technical solution of detecting whether the draw-wire encoder on the work machine is damaged in real-time can be achieved by the valve core detection sensor and signals output by the draw-wire sensor provided on each support leg, so as to improve the reliability and security of the device.

### BRIEF DESCRIPTION OF THE DRAWINGS

In order to describe the technical solutions in the present application or in the prior art more clearly, the accompanying drawings required for the description of the embodiments or the prior art will be briefly described below. Obviously, the accompanying drawings described below are merely some embodiments of the present application, and for the person skilled in the art, other accompanying drawings can also be acquired based on these accompanying drawings without creative efforts.
FIG. 1 is a first schematic diagram of a detection principle of a position of a work machine support leg provided in the present application.
FIG. 2 is a first schematic flowchart of a fault detection method provided in the present application.
FIG. 3 is a second schematic flowchart of a fault detection method provided in the present application.
FIG. 4 is a second schematic diagram of a detection principle of a position of a work machine support leg provided in the present application.
FIG. 5 is a schematic structural diagram of a fault detection apparatus provided in the present application.
FIG. 6 is a schematic structural diagram of an electronic device provided in the present application.

### DESCRIPTION OF EMBODIMENTS

In order to make the objectives, technical solutions, and advantages of the present application clearer, the technical solutions in the present application will be described clearly and completely in the following with reference to the accompanying drawings in the present application. Obviously, the described embodiments are merely some rather than all of the embodiments of the present application. Based on the embodiments of the present application, all other embodiments acquired by the ordinary person skilled in the art without creative efforts shall fall within the protection scope of the present application.

The terms "first" and "second" in the specification and the claims of the present application are used to distinguish similar objects, but are not used to describe a specific order or sequence. It should be understood that the data used in this manner can be exchanged under appropriate conditions, so that the embodiments of the present application can be implemented in an order other than those illustrated or described herein, and the objects distinguished by "first" and "second" are usually of the same class, without limiting the number of objects, for example, there may be one or more first objects. In addition, the expression "and/or" in the specification and the claims represents at least one of the connected objects, and the character "/" generally indicates that the associated objects before and after are in an "or" relationship.

The specific terms involved in the embodiments of the present application are described in detail as follows.

A draw-wire encoder, which is composed of an encoder and a draw-wire box, and the encoder can also be referred to as an angular displacement sensor which is used for measuring a rotation angle; a draw wire in the draw-wire box is pulled out under the action of an external force, and drives a rotor shaft of the angular displacement sensor to rotate, so as to enable the encoder to output a square wave signal. Typically, the rotor shaft of the angular displacement sensor may produce tens, hundreds, or thousands of pulse signals per revolution. In the embodiments of the present application, a rotation angle of the rotor shaft can be calculated according to the pulse signals generated by the angular displacement sensor.

In response to the technical problem in the related art that the draw-wire encoder on the work machine is damaged, the fault detection methods provided in the embodiments of the present application can timely and accurately detect whether the encoder is damaged and which encoder is damaged, so as to improve the reliability and security of the device.

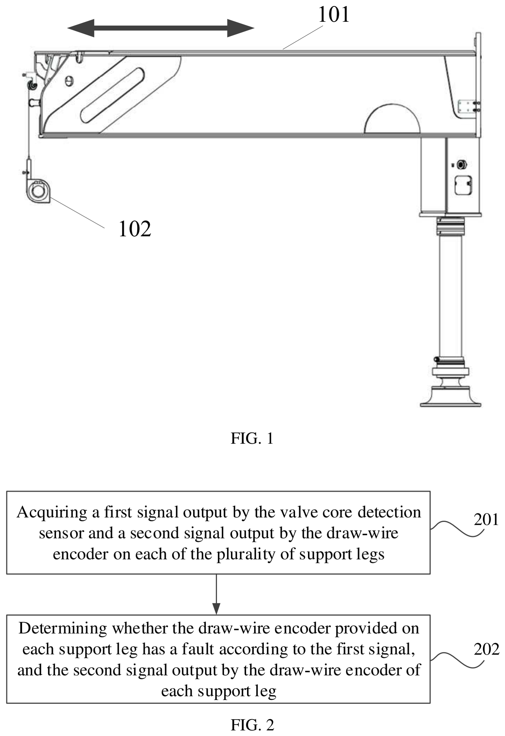

At the same time, with regard to the technical problem in the related art that it is difficult to accurately determine the current extended position of the support leg in the work machine, the embodiments of the present application provide a position detection system of a work machine support leg, the position detection system of the work machine support leg includes: a support leg multi-way valve, a plurality of support legs controlled by the support leg multi-way valve; where the support leg multi-way valve is provided with a valve core detection sensor, and the valve core detection sensor is configured to detect working states of the plurality of support legs; each of the plurality of support legs is provided with a draw-wire encoder for detecting a displacement amount of the support leg. As shown in FIG. 1, a moving end of a support leg 101 is provided with a draw wire of a draw-wire encoder 102, and the draw-wire encoder 102 can be provided on a vehicle body of the work machine, and can also be provided at a fixed end of the support leg 101. The support leg 101 can extend and retract in a horizontal direction, and when the support leg 101 extends and retracts, the draw wire is driven to move so as to trigger the draw-wire encoder 102 to generate pulse signals, so that the extending state of the support leg can be accurately detected according to the pulse signals generated by the draw-wire encoder 102.

The fault detection method provided in the embodiments of the present application will be described in detail in the following through specific embodiments and application scenarios thereof, in conjunction with the accompanying drawings.

As shown in FIG. 2, the fault detection method provided in the embodiments of the present application may include Step 201 and Step 202 as follows.

Step 201, acquiring a first signal output by the valve core detection sensor and a second signal output by the draw-wire encoder on each of the plurality of support legs.

Exemplarily, the above first signal is configured to determine whether the operator is operating the support leg, i.e., the signal output by the valve core detection sensor can be configured to determine whether the operator is operating the support leg through the support leg multi-way valve.

Exemplarily, the above second signal is configured to determine a speed of the draw-wire sensor provided on the support leg, and further determine a displacement amount of the corresponding support leg according to the speed and duration of the draw-wire sensor.

It should be noted that, in the fault detection method provided in the embodiments of the present application, an execution subject of the fault detection method may be a controller of the work vehicle. Meanwhile, in order to be compatible with different types of draw-wire encoders, in the embodiments of the present application, all the calculation steps are executed by the controller, and the draw-wire encoder is only configured to generate the pulse signals. The initial values of the adjustment coefficients corresponding to different draw-wire encoders are not completely the same, and the larger a radius of the draw-wire encoder is, the larger adjustment amplitude of the corresponding adjustment coefficient is.

Step 202, determining whether the draw-wire encoder provided on each support leg has a fault according to the first signal, and the second signal output by the draw-wire encoder of each support leg.

Exemplarily, in a process of detecting the current extended position of each support leg, if the draw wire of the draw-wire encoder provided on a certain support leg breaks, the draw wire may be quickly retracted into the draw-wire box, so that the speed of the draw-wire encoder is greatly increased; and if the draw wire of the draw-wire encoder on a certain support leg is stuck, the draw wire will stop moving, so that the speed of the draw-wire encoder is significantly decreased. Based on this, it is possible to determine whether the draw-wire encoder is abnormal according to the size of the speed of the draw-wire encoder, and remind the operator in time when the draw-wire encoder is abnormal.

Specifically, the above Step 202 may include any one of Step 202a1 to Step 202a5 as follows.

Step 202a1, in a case where the first signal indicates that a working state of a target support leg in the plurality of support legs is an extending state, determining that the target draw-wire encoder has a fault if the second signal indicates that a speed of the target draw-wire encoder provided on the target support leg in the plurality of support legs is greater than a preset maximum value.

Step 202a2, in a case where the first signal indicates that a working state of a target support leg is an extending state, determining that the target draw-wire encoder has a fault if the second signal indicates that a speed of the target draw-wire encoder is less than a preset minimum value.

Step 202a3, in a case where the first signal indicates that a working state of a target support leg is a retracting state, determining that the target draw-wire encoder has a fault if the second signal indicates that a speed of the target draw-wire encoder is greater than a preset maximum value.

Step 20a4, in the case where the first signal indicates that a working state of a target support leg is a retracting state, determining that the target draw-wire encoder has a fault if the second signal indicates that a speed of the target draw-wire encoder is less than a preset minimum value.

Step 202a5, in a case where the first signal indicates that a working state of a target support leg is a non-operating state, determining that the target draw-wire encoder has a fault if a speed of the target draw-wire encoder is greater than a preset minimum value.

Exemplarily, when a moving direction of the draw wire of the draw-wire encoder can be represented by positive and negative values of the speed, the speed of the above draw-wire encoder may be an absolute value of the speed.

It can be understood that when the target support leg is not in the non-operating state, if the draw wire breaks, it will also cause a significant increase in the speed of the draw-wire encoder. When the controller detects that the speed of the target draw-wire encoder exceeds the preset threshold, the controller can determine that the target draw-wire encoder has a fault, and remind the operator in time.

It should be noted that, other support legs on the work machine can all determine whether the draw-wire encoder provided on each support leg has a fault according to the method of determining whether the target draw-wire encoder provided on the target support leg has a fault in the above-described steps.

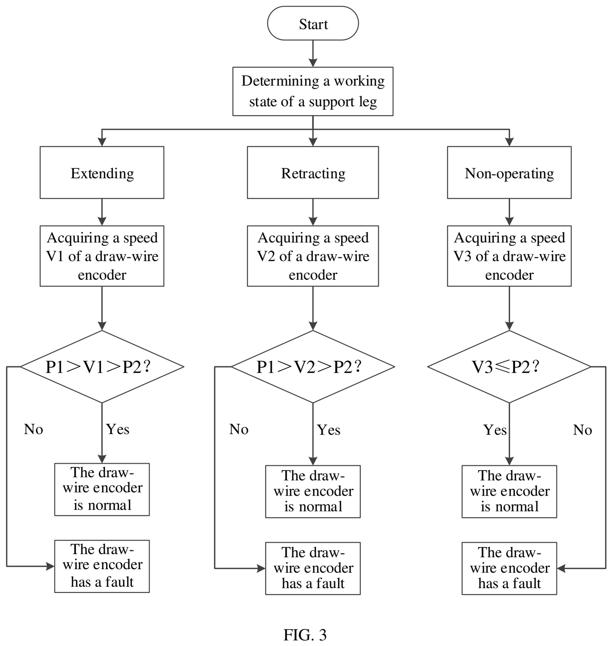

For example, as shown in FIG. 3, when the work vehicle determines whether the draw-wire encoder of the support leg has a fault, the working state of the support leg can be acquired first. In the case where the working state of the support leg is an extending working state, the speed V1 of the draw-wire encoder is acquired, then the speed V1 of the draw-wire encoder is compared with a preset maximum value P1 and a preset minimum value P2, and if P1>V1>P2, it can be determined that the draw-wire encoder is normal, otherwise, it is determined that the draw-wire encoder has a fault. In the case where the working state of the support leg is a retracting working state, the speed V2 of the draw-wire encoder is acquired, then the speed V2 of the draw-wire encoder is compared with the preset maximum value P1 and the preset minimum value P2, and if P1>V2>P2, it can be determined that the draw-wire encoder is normal, otherwise, it is determined that the draw-wire encoder has a fault. In the case where the working state of the support leg is a non-operating state, the speed V3 of the draw-wire encoder is acquired, then the speed V3 of the draw-wire encoder is compared with the preset minimum value P2 and if V3 ≤ P2, it can be determined that the draw-wire encoder is normal, otherwise, it is determined that the draw-wire encoder has a fault.

In a possible implementation, when a hydraulic system of the support leg is abnormal, it may also cause a significant decrease in the extending or retracting speed of the support leg, and at this time, it is necessary to determine a specific reason why the speed of the draw-wire encoder is less than the preset minimum value.

Specifically, the above Step 202a2 or Step 202a4 can further include Step 202a6 as follows.

Step 202a6, determining that the target draw-wire encoder has a fault if the second signal indicates that the speed of the target draw-wire encoder is less than the preset minimum value and a hydraulic system of the target support leg operates normally.

Exemplarily, whether the hydraulic system of the support leg operates normally may be determined according to a hydraulic oil flow rate or hydraulic oil pressure of the hydraulic system. In the case where the speed of the draw-wire encoder is less than the preset minimum value, if the hydraulic system of the support leg operates normally, it can be determined that the draw-wire encoder has a fault.

Optionally, in the embodiments of the present application, in order to improve the detection accuracy of the draw-wire sensor, the displacement amount of each support leg can be calculated according to the following method.

Exemplarily, before Step 201, the fault detection method provided in the embodiment of the present application can further include Step 203 and Step 204 as follows.

Step 203, acquiring a target pulse signal generated by the target draw-wire encoder provided on any target support leg in the plurality of support legs and the working state of the target support leg.

The working state of the target support leg includes an extending state and a retracting state.

It should be noted that, the above second signal may be the above target pulse signal, and may also be a speed signal directly output by the draw-wire sensor.

Exemplarily, the above target support leg is any one of the plurality of support legs in the work machine, i.e. the detection of the extending state of any one of the plurality of support legs in the work machine can be carried out according to the detection method of the extending state of the target support leg.

Exemplarily, the above target draw-wire encoder is the draw-wire encoder provided on the target support leg. An arrangement manner of the target draw-wire encoder may refer to the arrangement manner shown in FIG. 1.

Exemplarily, the work machine further includes a support leg multi-way valve, where the support leg multi-way valve is provided with a valve core detection sensor, and the valve core detection sensor is configured to detect the working state of the target support leg.

Exemplarily, the working state of the above target support leg is mainly used to determine a moving direction of the draw wire of the draw-wire encoder. Based on the above related description of the operating principle of the draw-wire encoder, when the target support leg extends and retracts, the target draw-wire encoder is triggered to generate a pulse signal.

Specifically, the above-mentioned Step 203 may include Step 203a as follows.

Step 203a, acquiring a target rotation angle corresponding to one pulse signal of the target draw-wire encoder, and calculating a target number of revolutions of the target draw-wire encoder based on the target rotation angle and the number of signals contained in the target pulse signal.

Exemplarily, after the target number of revolutions of the target draw-wire encoder is acquired, a corresponding displacement amount may be calculated based on an average draw wire radius of the target draw-wire encoder.

Step 204, calculating a target number of revolutions of the target draw-wire encoder according to the target pulse signal, and calculating a current extended position of the target support leg according to the target number of revolutions, an adjustment coefficient corresponding to the target number of revolutions and the working state of the target support leg.

The adjustment coefficient is configured to correct a displacement error generated by the target draw-wire encoder.

Exemplarily, in general, the rotation angle of the rotation shaft of the draw-wire encoder may be calculated according to the number of pulse signals generated by the draw-wire encoder and the rotation angle corresponding to each pulse signal. Then, the displacement amount of the support leg in the horizontal direction is calculated according to a circumference of the draw wire coil. However, since the circumference of the draw wire coil is not constant, in order to realize accurate calculation of the displacement amount of the support leg, the adjustment coefficient needs to be introduced to correct an error.

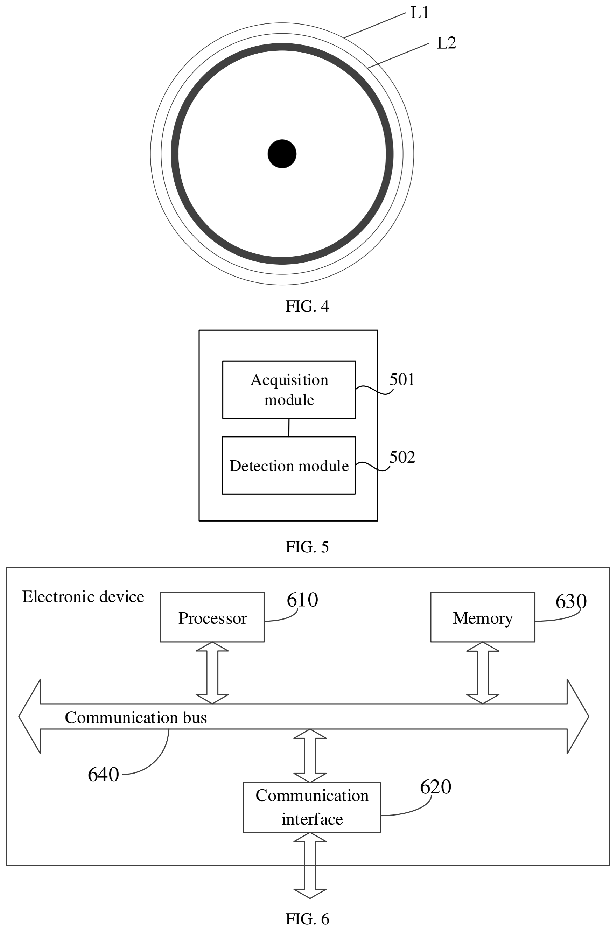

For example, as shown in FIG. 4, L1 is an outer draw wire of the draw-wire sensor, with a circumference of C1; and L2 is an inner draw wire of the draw-wire sensor, with a circumference of C2. It can be seen from a calculation formula of the circumference that the circumference of the outer draw wire is relatively long due to its large radius; and since the inner draw wire has a small radius, so that its circumference is relatively short, which results in a certain error when calculating the displacement amount of the support leg.

Exemplarily, in order to eliminate the above-mentioned error, in the embodiments of the present application, the adjustment coefficient is introduced when the displacement amount of the support leg is calculated. The size of the adjustment coefficient is related to the number of revolutions of the draw-wire sensor and the working state of the support leg. The adjustment coefficient corresponds to the target number of revolutions, and the adjustment coefficients corresponding to different target numbers of revolutions have different values.

It should be noted that, each step of the fault detection method in the embodiments of the present application may be executed by the controller of the work machine.

Optionally, in the embodiments of the present application, in order to accurately calculate the displacement amount of the support leg, the controller may adjust the adjustment coefficient according to the working state of the support leg and the number of revolutions of the draw-wire encoder.

Exemplarily, before the above Step 204, the fault detection method provided in the embodiments of the present application may further include Step 205 or Step 206 as follows.

Step 205, in a case where the working state of the target support leg is the extending state, adjusting a value of the adjustment coefficient in real time according to the size of the target number of revolutions.

The value of the adjustment coefficient is positively correlated with the target number of revolutions.

Step 206, in a case where the working state of the target support leg is a retracting state, adjusting a value of the adjustment coefficient in real time according to the size of the target number of revolutions.

The value of the adjustment coefficient is negatively correlated with the target number of revolutions.

Exemplarily, in the case where the working state of the target support leg is the extending state, as the target number of revolutions increases, the circumference of the draw wire gradually decreases, and at this time, the adjustment coefficient may be appropriately increased.

Exemplarily, in the case where the working state of the target support leg is the retracting state, as the target number of revolutions increases, the circumference of the wire gradually increases, and at this time, the adjustment coefficient can be appropriately reduced.

Exemplarily, based on the above real-time updated adjustment coefficient, an offset of the support leg in the horizontal direction can be precisely calculated, thereby implementing a real-time detection of the extended position of the support leg.

Specifically, the above-mentioned Step 204 may include Step 204a1 and Step 204a2 as follows.

Step 204a1, acquiring an average circumference of a draw wire per revolution in the target draw-wire encoder, and calculating a displacement amount of the target support leg according to the target number of revolutions, the adjustment coefficient and the average circumference.

Step 204a2, calculating the current extended position of the target support leg according to the displacement amount of the target support leg.

Exemplarily, the above average circumference is configured to determine a basic value of the displacement amount, and then error correction is performed by using the adjustment coefficient.

Exemplarily, the current extended position of the target support leg may be determined according to a comparison result of the displacement amount of the target support leg in the horizontal direction and a total journey. For example, after calculation, the displacement amount of the target support leg in the horizontal direction is 60 cm, and the total journey of the target support leg in the horizontal direction is 100 cm, so that the current extended position of the target support leg can be determined at this time.

For the fault detection method provided in the embodiments of the present application, in order to monitor the state of the draw-wire sensor provided on each support leg in real time and determine whether there is a fault, firstly, it is necessary to acquire the first signal output by the valve core detection sensor and the second signal output by the draw-wire encoder on each of the plurality of support legs. And then, according to the first signal, and the second signal output by the draw-wire encoder of each support leg, it is determined whether the draw-wire encoder provided on each support leg has a fault. In this way, the technical solution of detecting whether the draw-wire encoder on the work machine is damaged in real-time can be achieved by the valve core detection sensor and signals output by the draw-wire sensor provided on each support leg, so as to improve the reliability and security of the device.

It should be noted that, for the fault detection method provided in the embodiments of the present application, the execution subject may be a fault detection apparatus, or a control module for executing the fault detection method in the fault detection apparatus, such as the controller of the work vehicle. In the embodiments of the present application, taking the fault detection method executed by the fault detection device as an example, the fault detection apparatus provided in the embodiments of the present application will be described.

It should be noted that, in the embodiments of the present application, the above-mentioned methods are illustrated in the accompanying drawings. The fault detection method is exemplarily described by taking one of the accompanying drawings in the embodiments of the present application as an example. In specific implementation, the fault detection methods shown in the above-mentioned method accompanying drawings may also be implemented in combination with any other accompanying drawings shown in the above-mentioned embodiments, which will not be repeated herein.

The following text will describe a fault detection apparatus provided in the present application, and the fault detection apparatus described in the following text can be referred to and correspond to the fault detection method described in the previous text.

FIG. 5 is a schematic structural diagram of a fault detection apparatus provided in an embodiment of the present application. As shown in FIG. 5, it specifically includes:
an acquisition module 501 is configured to acquire a first signal output by the valve core detection sensor and a second signal output by the draw-wire encoder on each of the plurality of support legs; and a detection module 502 is configured to determine whether the draw-wire encoder provided on each support leg has a fault according to the first signal, and the second signal output by the draw-wire encoder of each support leg.

Optionally, the detection module 502 is specifically configured to, in a case where the first signal indicates that a working state of the target support leg in the plurality of support legs is an extending state, determine that the target draw-wire encoder has a fault if the second signal indicates that a speed of the target draw-wire encoder provided on the target support leg in the plurality of support legs is greater than a preset maximum value; and the detection module 502 is further specifically configured to, in a case where the first signal indicates that a working state of the target support leg is an extending state, determine that the target draw-wire encoder has a fault if the second signal indicates that a speed of the target draw-wire encoder is less than a preset minimum value.

Optionally, the detection module 502 is further specifically configured to, in a case where the first signal indicates that a working state of the target support leg is a retracting state, determine that the target draw-wire encoder has a fault if the second signal indicates that a speed of the target draw-wire encoder is greater than a preset maximum value; and the detection module 502 is further specifically configured to, in the case where the first signal indicates that a working state of the target support leg is a retracting state, determine that the target draw-wire encoder has a fault if the second signal indicates that a speed of the target draw-wire encoder is less than a preset minimum value.

Optionally, the detection module 502 is further specifically configured to, in a case where the first signal indicates that a working state of the target support leg is a non-operating state, determine that the target draw-wire encoder is abnormal if a speed of the target draw-wire encoder is greater than a preset minimum value.

Optionally, the detection module is specifically configured to determine that the target draw-wire encoder has a fault if the second signal indicates that the speed of the target draw-wire encoder is less than the preset minimum value and a hydraulic system of the target support leg operates normally.

Optionally, the apparatus further includes: a calculation module; where the acquisition module 501 is further configured to acquire a target pulse signal generated by the target draw-wire encoder provided on the target support leg and the working state of the target support leg; and the calculation module is configured to calculate a target number of revolutions of the target draw-wire encoder according to the target pulse signal, and calculate a current extended position of the target support leg according to the target number of revolutions, an adjustment coefficient corresponding to the target number of revolutions and the working state of the target support leg; where the working state of the target support leg includes an extending state and a retracting state, and the adjustment coefficient is configured to correct a displacement error generated by the target draw-wire encoder.

Optionally, the acquisition module 501 is configured to acquire a target rotation angle corresponding to one pulse signal of the target draw-wire encoder; and the calculation module is specifically configured to calculate the target number of revolutions of the target draw-wire encoder based on the target rotation angle and the number of signals contained in the target pulse signal.

Optionally, the apparatus further includes: an adjustment module; and the adjustment module is configured to, in a case where the working state of the target support leg is the extending state, adjust a value of the adjustment coefficient in real time according to the size of the target number of revolutions; where the value of the adjustment coefficient is positively correlated with the target number of revolutions.

Optionally, the adjustment module is further configured to, in a case where the working state of the target support leg is a retracting state, adjust a value of the adjustment coefficient in real time according to the size of the target number of revolutions; where the value of the adjustment coefficient is negatively correlated with the target number of revolutions.

Optionally, the calculation module is specifically configured to acquire an average circumference of a draw wire per revolution in the target draw-wire encoder, and calculate a displacement amount of the target support leg according to the target number of revolutions, the adjustment coefficient and the average circumference; and the calculation module is further specifically configured to calculate the current extended position of the target support leg according to the displacement amount of the target support leg.

For the fault detection apparatus provided in the present application, in order to monitor the state of the draw-wire sensor provided on each support leg in real time and determine whether there is a fault, firstly, it is necessary to acquire the first signal output by the valve core detection sensor and the second signal output by the draw-wire encoder on each of the plurality of support legs. And then, according to the first signal, and the second signal output by the draw-wire encoder of each support leg, it is determined whether the draw-wire encoder provided on each support leg has a fault. In this way, the technical solution of detecting whether the draw-wire encoder on the work machine is damaged in real-time can be achieved by the valve core detection sensor and signals output by the draw-wire sensor provided on each support leg, so as to improve the reliability and security of the device.

FIG. 6 illustrates a schematic diagram of a physical structure of an electronic device. As shown in FIG. 6, the electronic device may include: a processor 610, a communication interface 620, a memory 630, and a communications bus 640, where the processor 610, the communication interface 620, and the memory 630 communicate with each other through the communication bus 640. The processor 610 can call logic instructions in the memory 630 to execute a fault detection method, and the method includes: acquiring a first signal output by the valve core detection sensor and a second signal output by the draw-wire encoder on each of the plurality of support legs; and determining whether the draw-wire encoder provided on each support leg has a fault according to the first signal, and the second signal output by the draw-wire encoder of each support leg.

In addition, when the logic instructions in the above-mentioned memory 630 can be implemented in a form of software functional units and can be stored in a computer-readable storage medium when being sold or used as an independent product. Based on this understanding, the technical solution of the present application may be essentially, or the part contributing to the prior art may be, or part of the technical solutions may be implemented in the form of a software product. The computer software product is stored in a storage medium and includes several instructions so as to enable a computer device (which can be a personal computer, server, or network device, etc.) to implement all or part of the steps of the methods described in the embodiments of the present application. The storage medium mentioned above includes any medium that can store program codes, such as a USB flash disk, a removable hard disk, a read-only memory (Read-Only Memory, ROM), a random access memory (Random Access Memory, RAM), a magnetic disk, or an optical disk and so on.

In another aspect, the present application further provides a computer program product, where the computer program product includes a computer program stored on the computer-readable storage medium, and the computer program includes program instructions. When the program instructions are executed by a computer, the computer can execute the fault detection method provided by the above-mentioned methods, and the method includes: acquiring a first signal output by the valve core detection sensor and a second signal output by the draw-wire encoder on each of the plurality of support legs; and determining whether the draw-wire encoder provided on each support leg has a fault according to the first signal, and the second signal output by the draw-wire encoder of each support leg.

In another aspect, the present application further provides a computer-readable storage medium on which a computer program is stored. The computer program, when being executed by a processor, is used to implement the above fault detection method, and the method includes: acquiring a first signal output by the valve core detection sensor and a second signal output by the draw-wire encoder on each of the plurality of support legs; and determining whether the draw-wire encoder provided on each support leg has a fault according to the first signal, and the second signal output by the draw-wire encoder of each support leg.

The apparatus embodiments mentioned above are merely exemplary, where the units described as separate components may or may not be physically separated, and the components displayed as units may or may not be physical units, that is, may be located in one position, or may be distributed on a plurality of network units. Some or all of the modules may be selected according to actual needs to achieve the objective of the solution in this embodiment. The ordinary person skilled in the art would have been able to understand and implement same without creative efforts.

Through the description of the above-mentioned embodiments, the person skilled in the art may clearly understand that each embodiment may be implemented by software in addition to a necessary universal hardware platform, and definitely may also be implemented by hardware. Based on this understanding, the above-mentioned technical solution may be essentially, or the part contributing to the prior art may be implemented in the form of software products. The computer software product can be stored in a computer-readable storage medium, such as a ROM/RAM, a magnetic disk, or an optical disk and includes several instructions so as to enable a computer device (which can be a personal computer, server, or network device, etc.) to implement the method described in the embodiments or in some parts of the embodiments.

Finally, it should be noted that the above-mentioned embodiments are merely intended to describe the technical solutions of the present application rather than limiting the present application. Although the present application is described in detail with reference to the above-mentioned embodiments, the ordinary person skilled in the art should understand that they may still make modifications to the technical solutions described in the above-mentioned embodiments, or make equivalent replacements to some or all of technical features thereof. These modifications or replacements do not make the essence of the corresponding technical solutions depart from the spirit and scope of the technical solutions in the embodiments of the present application.

## Claims

1. A fault detection method, which is applied to a position detection system of a work machine support leg, the system comprising: a support leg multi-way valve, and a plurality of support legs controlled by the support leg multi-way valve; wherein the support leg multi-way valve is provided with a valve core detection sensor, and the valve core detection sensor is configured to detect working states of the plurality of support legs; each of the plurality of support legs is provided with a draw-wire encoder for detecting a displacement amount of the support leg, and the method comprises:
acquiring a first signal output by the valve core detection sensor and a second signal output by the draw-wire encoder on each of the plurality of support legs; and
determining whether the draw-wire encoder provided on each support leg has a fault according to the first signal, and the second signal output by the draw-wire encoder of each support leg.

2. The method according to claim 1, wherein the determining whether the draw-wire encoder provided on each support leg has a fault according to the first signal, and the second signal output by the draw-wire encoder of each support leg, comprising:
in a case where the first signal indicates that a working state of a target support leg in the plurality of support legs is an extending state, determining that a target draw-wire encoder has a fault if the second signal indicates that a speed of the target draw-wire encoder provided on the target support leg in the plurality of support legs is greater than a preset maximum value;
or,
in the case where the first signal indicates that the working state of the target support leg is the extending state, determining that the target draw-wire encoder has a fault if the second signal indicates that the speed of the target draw-wire encoder is less than a preset minimum value.

3. The method according to claim 1, wherein the determining whether the draw-wire encoder provided on each support leg has a fault according to the first signal, and the second signal output by the draw-wire encoder of each support leg, comprising:
in a case where the first signal indicates that a working state of a target support leg in the plurality of support legs is a retracting state, determining that a target draw-wire encoder has a fault if the second signal indicates that a speed of the target draw-wire encoder provided on the target support leg is greater than a preset maximum value;
or,
in the case where the first signal indicates that the working state of the target support leg is the retracting state, determining that the target draw-wire encoder has a fault if the second signal indicates that the speed of the target draw-wire encoder is less than a preset minimum value.

4. The method according to claim 1, wherein the determining whether the draw-wire encoder provided on each support leg has a fault according to the first signal, and the second signal output by the draw-wire encoder of each support leg, comprising:
in a case where the first signal indicates that a working state of a target support leg in the plurality of support legs is a non-operating state, determining that a target draw-wire encoder is abnormal if a speed of the target draw-wire encoder provided on the target support leg is greater than a preset minimum value.

5. The method according to claim 2 or 3, the determining that the target draw-wire encoder has a fault if the second signal indicates that the speed of the target draw-wire encoder is less than the preset minimum value, comprising:
determining that the target draw-wire encoder has a fault if the second signal indicates that the speed of the target draw-wire encoder is less than the preset minimum value and a hydraulic system of the target support leg operates normally.

6. The method according to claim 1, wherein before acquiring the first signal output by the valve core detection sensor and the second signal output by the draw-wire encoder on each of the plurality of support legs, the method further comprises:
acquiring a target pulse signal generated by the target draw-wire encoder provided on any target support leg in the plurality of support legs and a working state of the target support leg;
calculating a target number of revolutions of the target draw-wire encoder according to the target pulse signal, and calculating a current extended position of the target support leg according to the target number of revolutions, an adjustment coefficient corresponding to the target number of revolutions and the working state of the target support leg;
wherein the working state of the target support leg comprises an extending state and a retracting state, and the adjustment coefficient is configured to correct a displacement error generated by the target draw-wire encoder.

7. The method according to claim 6, wherein the calculating the target number of revolutions of the target draw-wire encoder according to the target pulse signal, comprising:
acquiring a target rotation angle corresponding to one pulse signal of the target draw-wire encoder, and calculating the target number of revolutions of the target draw-wire encoder based on the target rotation angle and the number of signals contained in the target pulse signal.

8. A fault detection apparatus, which is applied to a position detection system of a work machine support leg, the system comprising: a support leg multi-way valve, and a plurality of support legs controlled by the support leg multi-way valve; wherein the support leg multi-way valve is provided with a valve core detection sensor, and the valve core detection sensor is configured to detect working states of the plurality of support legs; each of the plurality of support legs is provided with a draw-wire encoder for detecting a displacement amount of the support leg, and the apparatus comprises:
an acquisition module, configured to acquire a first signal output by the valve core detection sensor and a second signal output by the draw-wire encoder on each of the plurality of support legs; and
a detection module, configured to determine whether the draw-wire encoder provided on each support leg has a fault according to the first signal, and the second signal output by the draw-wire encoder of each support leg.

9. A position detection system of a work machine support leg, comprising: a plurality of support legs and a controller; wherein any target support leg in the plurality of support legs is provided with a draw-wire encoder for detecting a displacement amount of the target support leg; and the controller is configured to implement the steps of the fault detection method according to any one of claims 1 to 7.

10. A vehicle, comprising the position detection system of the work machine support leg according to claim 9 mounted thereon.
